# EUROPÄISCHE PATENTSCHRIFT

(11) **EP 3 374 148 B1**
(45) Veröffentlichungstag und Bekanntmachung des Hinweises auf die Patenterteilung: **26.06.2019**
(21) Anmeldenummer: 17703321.4
(22) Anmeldetag: 03.02.2017
(51) Int. Cl.: B29C 49/46, B29C 49/42, B29C 49/58, B29C 49/06, B29C 49/12, B29C 49/36, B29K 67/00, B29L 31/00

(54) **VERFAHREN UND VORRICHTUNG ZUM HERSTELLEN VON MIT EINEM FLÜSSIGEN FÜLLGUT GEFÜLLTEN BEHÄLTERN AUS VORFORMLINGEN DURCH UNTER DRUCK IN DEN VORFORMLING EINGELEITETES FÜLLGUT**
METHOD AND APPARATUS FOR PRODUCING LIQUID-CONTENTS-FILLED CONTAINERS FROM PREFORMS BY CONTENTS BEING INTRODUCED INTO THE PREFORM UNDER PRESSURE
PROCÉDÉ ET DISPOSITIF DE FABRICATION DE RÉCIPIENTS REMPLIS D'UN PRODUIT DE REMPLISSAGE LIQUIDE À PARTIR DE PRÉFORMES, GRÂCE À UNE MATIÈRE DE REMPLISSAGE INTRODUITE SOUS PRESSION DANS LA PRÉFORME

(43) Veröffentlichungstag der Anmeldung: 19.09.2018
(73) Patentinhaber: KHS Corpoplast GmbH, 22145 Hamburg (DE)
(72) Erfinder: LITZENBERG, Michael, 21039 Börnsen (DE); LINKE, Michael, 22159 Hamburg (DE); BERGER, Frank, 22885 Barsbüttel (DE); JAISER, Benjamin, 20144 Hamburg (DE)
(74) Vertreter: Meissner Bolte Partnerschaft mbB
(86) Internationale Anmeldenummer: PCT/EP2017/000148
(87) Internationale Veröffentlichungsnummer: WO 2018/141347

(56) Entgegenhaltungen:
- EP-A1- 2 823 948
- EP-A1- 2 960 161
- EP-A1- 3 112 126
- DE-U1-202009 006 684

## Beschreibung

Die vorliegende Erfindung betrifft ein Verfahren und eine Vorrichtung zum Herstellen von mit einem flüssigen Füllgut gefüllten Behältern aus Vorformlingen durch unter Druck in den Vorformling eingeleitetes Füllgut nach dem Oberbegriff von Anspruch 1 bzw. nach dem Oberbegriff von Anspruch 12. Gattungsgemäße Verfahren und Vorrichtungen aus dem Stand der Technik sind in den Dokumente EP2823948A1 und DE20-2009-006684U1 beschrieben.

Unter Vorformling wird in diesem Zusammenhang ein vorgefertigter Rohling verstanden, z.B. aus PET oder einem anderen thermoplastischen Kunststoff, der beispielsweise in einem Spritzgussverfahren hergestellt wird. Solche Vorformlinge sind in der Regel bodenseitig verschlossen und weisen dem Boden gegenüberliegend einen offenen Mündungsbereich mit daran außenseitig bereits ausgebildetem Gewinde auf. Einen solchen Vorformling zeigt z.B. Figur 2 der DE 10 2010 007 541 A1.

Herkömmlich werden Behälter, insbesondere Flaschen, im Blasformverfahren in einer Blasformmaschine durch ein unter Druck in einen thermisch konditionierten Vorformling einströmendes Formgas geformt und in einem zweiten Schritt in einer Füllmaschine mit einem Füllgut, insbesondere einem flüssigen Füllgut, befüllt. Einen typischen Stand der Technik für eine Blasformmaschine zeigt die WO 2012/083910 A1, die auch eine typische Heizstrecke für die thermische Konditionierung der Vorformlinge zeigt, sowie die typische Anordnung von Blasstationen auf einem rotierenden Blasrad. Auch bezüglich der Zu- und Abführung der Vorformlinge und bezüglich der Handhabung der Vorformlinge innerhalb der Blasformmaschine kann auf diesen Stand der Technik verwiesen werden. Die in der vorliegenden Anmeldung beschriebenen Verfahren und Vorrichtungen können bezüglich ihres Aufbaus, bezüglich der Vorformlingshandhabung und bezüglich der Vorformlingsbearbeitung im Wesentlichen wie in der WO 2012/083910 A1 beschrieben ausgeführt sein. Abweichungen ergeben sich zwingend lediglich aus dem Umstand, dass die genannte WO 2012/083910 A1 Blasstationen und ein Blasrad offenbart, die vorliegend zu ersetzen sind durch Form- und Füllstationen bzw. durch ein Arbeitsrad, auf dem mehrere Form- und Füllstationen angeordnet sind. Aus diesem Grunde wird explizit Bezug genommen auf die Beschreibung der WO 2012/083910 A1, auf die dortigen Figuren 1 - 12 sowie auf die zugehörige Figurenbeschreibung. Soweit nachfolgend nicht abweichend beschrieben, kann die erfindungsgemäße Vorrichtung in der gleichen Art und Weise ausgeführt sein.

Charakteristisch für die Herstellung von Behältern aus Vorformlingen ist, dass für den Vorformling einerseits und für den Behälter andererseits jeweils unterschiedliche Formwerkzeuge zum Einsatz kommen.

Von der Herstellung von Behältern aus Vorformlingen zu unterscheiden sind gattungsfremde Extrusionsblasverfahren, bei denen das aufgeschmolzene Rohmaterial direkt in eine die Behälterkontur vorgebende Blasform extrudiert und unmittelbar anschließend aufgeblasen wird. Davon zu unterscheiden sind auch Verfahren zur Herstellung und Befüllung von Behältern aus einem Schlauchmaterial als Ausgangspunkt. Letzteren Stand der Technik zeigt z.B. die CH 388 173. Auch bei diesem Stand der Technik wird ein Extrusionsformverfahren offenbart, wobei hier ein thermoplastisches Material in die Form eines Schlauches extrudiert und direkt in einer äußeren Form umgeformt wird.

Zur rationelleren Herstellung von Behältern aus Vorformlingen sind bereits Vorrichtungen und Verfahren entwickelt worden, bei denen der thermisch konditionierte Vorformling nicht durch ein Druckgas, sondern durch das unter Druck zugeführte flüssige Füllgut in einem Schritt geformt und gefüllt werden kann. Ein solches Verfahren und eine solche Vorrichtung ist z.B. aus der DE 10 2010 007 541 A1 bekannt.

Damit ein Vorformling in einen Behälter umgeformt werden kann, wird er thermisch konditioniert, also insbesondere erwärmt und mit einem geeigneten Temperaturprofil versehen. Dabei wird der Körper des Vorformlings inklusive des geschlossenen Bodens z.B. auf ca. 120 °C erwärmt und dadurch formbar. Der Mündungsbereich des Vorformlings wird dabei in der Regel nur auf eine deutlich niedrigere Temperatur gebracht, da der Vorformling am Mündungsbereich in der Form- und Füllmaschine gehandhabt und gehalten wird und sich unter den dort üblichen Haltekräften nicht verformen darf. Weiterhin ist im Mündungsbereich in der Regel auch bereits ein Gewinde ausgebildet, das keiner Formänderung mehr unterworfen werden soll. Für die thermische Konditionierung verfügt eine Vorrichtung zur Herstellung von gefüllten Behältern über eine Heizstrecke, die mit Heizeinrichtungen ausgestattet ist, entlang der die Vorformlinge geführt und dabei mit dem gewünschten Temperaturprofil versehen werden. Eine solche Heizstrecke kann zum Beispiel ausgebildet sein, wie in der WO 2012/083910 A1 gezeigt.

Der Formvorgang muss dann sehr schnell ablaufen, damit die im Vorformling gespeicherte Wärme ausreicht, um den Vorformling bis zum Abschluss des Formvorgangs plastisch verformbar zu erhalten. Bei der Formung mit flüssigem Füllgut muss dem Vorformling das für den ausgeformten Behälter erforderliche Füllgutvolumen deshalb unter hohem Druck und innerhalb eines kurzen Zeitintervalls zugeführt werden. Typische Füllzeiten liegen im Bereich von 100 bis 150 ms, wodurch Volumenströme von bis zu 20 Liter/s und mehr bei Drücken von bis zu 40 bar erforderlich sind.

Der Beginn des Formvorgangs wird meist durch eine in den Vorformling eintauchende Reckstange unterstützt, die auf den Boden des Vorformlings in dessen axialer Richtung mechanisch Druck ausübt, um den Vorformling anzurecken. Die Reckstange übernimmt anschließend die Führung des Bodens, damit sich der Behälter symmetrisch ausbilden kann und die Axialreckung des Vorformlings möglichst einen bestimmten zeitlichen Verlauf nimmt. Es sind aber auch Verfahren und Vorrichtungen möglich, die ohne eine Reckstange arbeiten.

Für die Umformung des Vorformlings in einen Behälter ist ein von Material und Form des Vorformlings und des herzustellenden Behälters abhängender Mindestfülldruck erforderlich, wobei zu Beginn der Umformphase ein höherer Druck vorteilhaft sein kann, um den Umformvorgang in Gang zu setzen.

In industriellen Prozessen werden der Form- und Füllstation einer Maschine zur Herstellung von gefüllten Behältern Vorformlinge zugeführt und nacheinander geformt und gefüllt. Dabei sind während der Füllzeit hohe Volumenströme erforderlich, während in den Prozesszeiten zwischen zwei Füllungen kein Füllgut fließt. Die vorliegende Erfindung kann dabei sowohl auf taktweise arbeitende Maschinen angewendet werden als auch auf Maschinen nach dem Rundläuferprinzip. Diese Maschinen nach dem Rundläuferprinzip können zum Beispiel ein Arbeitsrad aufweisen, das im regulären Form- und Füllbetrieb kontinuierlich umlaufend angetrieben ist. Auf diesem Arbeitsrad sind mehrere Form- und Füllstationen angeordnet.

Die erforderlichen hohen Volumenströme sind mit kontinuierlich laufenden Pumpen nur schwer erreichbar, zumal die volle Leistung nur sehr kurzzeitig benötigt wird. Deshalb werden für die hydraulische Formung und Füllung von Behältern z.B. Kolbenpumpen verwendet, deren Hubvolumen der erforderlichen Füllgutmenge entspricht. Der Kolben wird mit einem Linearmotor, hydraulisch oder pneumatisch angetrieben und das im Zylinder der Kolbenpumpe befindliche Füllgut in den Vorformling bzw. in den sich formenden Behälter gepresst. Einem solchen Stand der Technik entspricht z.B. die US 2008/0029928 A1.

Die Reaktionszeit einer Kolbenpumpe ist im Vergleich zur Füllzeit lang, so dass insbesondere zu Beginn eines Form- und Füllvorgangs nicht der gewünschte Volumenstrom erreicht wird und eine reproduzierbar gute Verteilung des Materials des Vorformlings bei dem geformten Behälter nicht gewährleistet werden kann.

Außerdem können je nach Auslegung der Füllvorrichtung auch mehrere Behälter zeitlich überlappend an mehreren Füllstationen gefüllt werden. Mit einer Kolbenpumpe der oben beschriebenen Art kann eine ausreichende Füllgutzufuhr nicht gewährleistet werden. Der Beginn und das Ende aufeinanderfolgender Füllvorgänge laufen nicht nahtlos und harmonisch, so dass es zu Druckpulsationen im Verteilersystem kommen kann.

Es ergibt sich als weiterer Nachteil, dass zum Antrieb des Kolbens der geschilderten Kolbenpumpen eine Antriebseinrichtung mit einer hohen Leistungsaufnahme erforderlich ist, um in einer möglichst kurzen Füllzeit den erforderlichen Fülldruck und die erforderliche Füllgutmenge zur Verfügung zu stellen. Bei Form- und Füllmaschinen mit einem im regulären Form- und Füllbetrieb kontinuierlich rotierenden Arbeitsrad mit mehreren darauf angeordneten Form- und Füllstationen ist jede dieser Stationen mit einer solchen Antriebseinrichtung zu versehen, so dass hohe Kosten entstehen.

Es ist Aufgabe der Erfindung, ein Verfahren und eine Vorrichtung zum Herstellen von mit einem flüssigen Füllgut gefüllten Behältern aus Vorformlingen durch unter Druck in den Vorformling eingeleitetes Füllgut vorzuschlagen, bei denen sowohl der gewünschte Fülldruck als auch der gewünschte Volumenstrom des Füllguts während der gesamten Form- und Füllphase zuverlässig zur Verfügung steht. Dabei sollen insbesondere die vorstehend geschilderten Antriebseinrichtungen mit hoher Leistungsaufnahme vermieden werden.

Die erfindungsgemäße Aufgabe wird gelöst durch ein Verfahren zum Herstellen von mit einem flüssigen Füllgut gefüllten Behältern aus Vorformlingen gemäß Anspruch 1. Erfindungsgemäß ist zusätzlich zu dem gattungsgemäßen Druckspeicher eine Verdrängerpumpe mit einer Füllkammer für das Füllgut vorgesehen, die einen in der Füllkammer beweglich geführten Verdrängungskörper aufweist. Bewegung des Verdrängungskörpers führt zu einer Verdrängung des Füllgutes in der Füllkammer. Der Verdrängungskörper unterteilt die Kammer in eine erste, füllstationsseitige und eine zweite, füllstationsabgewandte Teilkammer. Bei Verschieben des Verdrängungskörpers vergrößert sich die eine Teilkammer zu Lasten der anderen Teilkammer. Beide Teilkammern sind in Strömungsverbindung mit dem Druckspeicher bringbar. Füllgut aus dem Druckspeicher kann in die Teilkammern geführt werden. Der Verdrängungskörper steht in Antriebsverbindung zu einer Antriebseinrichtung und ist von der Antriebseinrichtung antreibbar ist. Die Antriebseinrichtung kann den Verdrängungskörper innerhalb der Kammer in der Position verändern und dadurch die Teilkammern in ihrer Größe verändern. Erfindungsgemäß ist weiterhin vorgesehen, dass bei geöffnetem Füllventil zumindest zeitweise die Antriebseinrichtung und/oder der Druckspeicher jeweils den Verdrängungskörper mit einer Antriebskraft beaufschlagen, und dabei der Verdrängungskörper zumindest einen Teil der für die Umformung des Vorformlings erforderlichen Füllgutmenge in Richtung des Vorformlings verdrängt. Es ist dadurch eine exaktere Steuerung und Dosierung der Füllgutmenge möglich, die in den Vorformling gepresst wird als im gattungsbildenden Stand der Technik. Die verdrängte Füllgutmenge ergibt sich anhand der Positionsverschiebung des Verdrängerkörpers innerhalb der Füllkammer und die kontrollierte Verschiebung des Verdrängerkörpers ermöglicht daher eine genaue und reproduzierbare Menge an Füllgut, die in den Vorformling innerhalb einer bestimmten Zeit strömt. Sowohl Füllmenge als auch Fülldruck sind genauer dosierbar als im gattungsbildenden Stand der Technik.

Unter anderem ist möglich, dass die Verdrängerpumpe und der Druckspeicher zumindest zeitweise jeweils eine eigene Antriebskraft auf den Verdrängungskörper ausüben, die zu einer Kraftüberlagerung führen. Denkbar ist, dass der Druckspeicher auf den Verdrängerkörper eine Kraft in Richtung des Füllventils ausübt und die Antriebseinrichtung dieser Kraft entgegengerichtet wirkt, um eine zu hohe Verdrängung an Füllgut pro Zeit zu verhindern. Denkbar ist auch, dass beide eine gleichgerichtete Kraft auf den Verdrängerkörper aufbringen, z.B. beide in Richtung des Füllventils. Dadurch lassen sich hohe Füllgutmenge pro Zeiteinheit verdrängen, ohne dass die Antriebseinrichtung wie im Stand der Technik hoch dimensioniert werden muss, denn ein Teil der Antriebsleistung wird vom Druckspeicher erbracht. Die Antriebseinrichtung kann bedarfsweise auch ohne Krafteinwirkung auf den Verdrängerkörper bleiben. Es ist auch denkbar, dass alleine die Antriebseinrichtung den Verdrängerkörper antreibt, während der Druckspeicher ohne Krafteinwirkung bleibt. Dies kann z.B. für den Ladehub der Verdrängerpumpe bevorzugt sein, also bei Bewegung des Verdrängerkörpers in füllventilabgewandter Richtung. Im Laufe des Füll- und Formprozesses kann zwischen diesen Möglichkeiten auch nach Bedarf gewechselt werden. Die oben genannten Möglichkeiten ergeben sich dadurch, dass der Druckspeicher mit beiden Teilkammern strömungsverbindbar ist, so dass je nach Verbindungsbeschaltung der Druck des Druckspeichers wahlweise auf einer der beiden oder auf keiner der beiden oder auf beiden Seiten des Verdrängerkörpers anliegen kann.

Die erfindungsgemäße Aufgabe wird auch gelöst durch eine Vorrichtung zum Herstellen von mit einem flüssigen Füllgut gefüllten Behältern aus Vorformlingen gemäß Anspruch 12. Die im vorhergehenden Absatz zum Verfahrensanspruch gegebenen Erläuterungen gelten für die Vorrichtung entsprechend.

Sowohl beim Verfahrens- als auch beim Vorrichtungsanspruch ist bevorzugt, dass der Verdrängungskörper den überwiegenden Teil der für die Umformung des Vorformlings erforderlichen Füllgutmenge verdrängt (> 50% der erforderlichen Füllgutmenge), wobei besonders bevorzugt ist, dass die gesamte für die Umformung benötigte Füllgutmenge vom Verdrängungskörper verdrängt wird. Auf diese Weise hängt die in den Vorformling eingespeiste Füllgutmenge nur noch mit der Bewegung des Verdrängungskörpers zusammen, nämlich von der verdrängten Füllgutmenge. Diese Bewegung ist exakt und reproduzierbar ausführbar. Über die kontrollierte Verschiebung des Verdrängerkörpers ist also eine genaue und reproduzierbare Menge an Füllgut einstellbar, die in den Vorformling innerhalb einer bestimmten Zeit strömt. Sowohl Füllmenge als auch Fülldruck sind genau dosierbar.

Grundsätzlich kann die Erfindung auch in taktweise arbeitenden Maschinen realisiert werden. Hohe Produktionszahlen lassen sich aber dann erreichen, wenn mehrere Form- und Füllstationen auf einem gemeinsamen, rotierenden Arbeitsrad angeordnet sind, wobei dieses Arbeitsrad im regulären Form- und Füllbetrieb der Vorrichtung kontinuierlich umläuft. Weiterhin ist sowohl für das Verfahren als auch für die Vorrichtung bevorzugt, dass die Formung des Behälters aus dem Vorformling unterstützt wird durch eine Reckstange, die während der Einleitung des Füllgutes in den Vorformling zumindest zeitweise gleichzeitig den Vorformling in dessen Axialrichtung reckt. Solche Reckstangen und die Ausbildung solcher Reckstangen sind grundsätzlich aus Blasformmaschinen bekannt.

Die nachstehenden Erläuterungen und die nachstehenden bevorzugten Ausführungsformen nach den Unteransprüchen gelten in analoger Weise für die Verfahren und die Vorrichtungen.

Das erfindungsgemäße Verfahren und die erfindungsgemäße Vorrichtung haben den Vorteil, dass die Antriebseinrichtung der zusätzlich vorgesehenen Verdrängerpumpe die Antriebskraft für die Verdrängung des Füllgutes in der Füllkammer nur teilweise erzeugen muss, denn der Druckspeicher kann unterstützend auf den Verdrängungskörper einwirken. Aus diesem Grunde kann die Antriebseinrichtung geringer dimensioniert werden als im Stand der Technik bekannt. Das erfindungsgemäße Verfahren und die erfindungsgemäße Vorrichtung haben auch den Vorteil, dass eine kontinuierlich laufende Pumpe als Druckpumpe eingesetzt werden kann, um den Druckspeicher mit dem erforderlichen Druck zu versorgen. Solche Pumpen können zwar die bei der Umformung erforderlichen hohen Drücke erreichen, in der Regel aber nicht den für die Füllung erforderlichen großen Volumenstrom. In den Prozesszeiten zwischen zwei Füllvorgängen beaufschlagt diese Pumpe z.B. bei geschlossenem Füllventil den Druckspeicher mit Füllgut unter Druck, wobei sich der Druckspeicher mit einem Volumen an Füllgut füllt. Sobald das Füllventil geöffnet wird, steht dieser Druck zur Verfügung und das Füllgut kann in Richtung auf den Vorformling strömen. Erfindungsgemäß ist wenigstens zeitweise während dieses Form- und Füllvorganges eine Verdrängerpumpe daran beteiligt, das Füllgut in Richtung auf den Vorformling zu befördern.

Es ist dabei bevorzugt, dass die Verdrängerpumpe als Hubkolbenpumpe ausgeführt ist, die auch als Kolbenpumpen bezeichnet werden. Verdrängerpumpen weisen eine Füllkammer auf, die vorliegend mit Füllgut gefüllt ist. Innerhalb der Füllkammer ist ein Verdrängungskörper beweglich geführt. Im Falle einer Hubkolbenpumpe ist der Verdrängungskörper als Kolben ausgeführt. Der Verdrängungskörper, respektive der Kolben, unterteilt die Füllkammer in zwei Teilkammern. Beide Teilkammern sind in Strömungsverbindung mit dem Druckspeicher bringbar. Der Verdrängungskörper steht zusätzlich in einer Antriebsverbindung zu der Antriebseinrichtung, sodass der Verdrängungskörper angetrieben werden kann zur Erzeugung einer Verdrängungsbewegung mit einer Verdrängungskraft. Die Strömungsverbindung mit dem Druckspeicher hat den Vorteil, dass das Füllgut aus dem Druckspeicher in die Füllkammer unter Druck nachströmen kann, und dass weiterhin mit Vorteil zwischen der ersten und der zweiten Kammer der Füllkammer ein Druckausgleich erfolgen kann, wobei aufgrund der Strömungsverbindung mit dem Druckspeicher dieser Druck auf der Druckhöhe des Druckspeichers gehalten werden kann. Nach einem solchen Druckausgleich kann der Verdrängungskörper verschoben werden ohne die Notwendigkeit der Überwindung eines Druckunterschiedes zwischen den Teilkammern.

Die Verdrängerpumpe bzw. deren Antriebseinrichtung kann insbesondere dazu verwendet werden, dass die Füllgeschwindigkeit während des Form- und Füllprozesses zeitlich variierend gesteuert werden kann. Hierzu ist die Antriebseinrichtung weggesteuert ausgeführt. Damit ist gemeint, dass die von der Antriebseinrichtung aufbrachte Antriebsenergie über die Hubweg des Verdrängungskörpers variiert. Die Antriebseinrichtung kann zum Beispiel zu Beginn des Form- und Füllvorganges den angetriebenen Verdrängungskörper mit höherer Geschwindigkeit vorantreiben, als zu einem späteren Zeitpunkt des Form- und Füllvorganges. Die Wegsteuerung kann dabei auch steuerungsseitig geändert werden, wenn die erzielten Ergebnisse bei der Behälterherstellung eine Abänderung der Parameter des Herstellungsprozesses erforderlich machen. Dazu könnte z.B. die Antriebscharakteristik der Antriebseinrichtung verändert werden, also der zeitliche Verlauf der Antriebskraft auf dem Hubweg des Verdrängungskörpers. Die Antriebseinrichtung kann zum Beispiel als Linearmotor oder als sonstiger Motor ausgebildet sein. Insbesondere Linearmotoren lassen sich in einfacher Weise und präzise steuern, sodass diese Linearmotoren sehr gute Eigenschaften aufweisen, die sie als Antriebseinrichtung bevorzugt erscheinen lassen, insbesondere als eine mit leicht zu verändernder Antriebscharakteristik. Es ist auch denkbar, die Antriebseinrichtung zum Beispiel in der Art einer Kurvensteuerung auszuführen, wobei hierbei unter anderem als nachteilig angesehen wird, dass eine Änderung der Antriebscharakteristik nur durch Austausch der Steuerkurve möglich wäre.

Es ist weiterhin bevorzugt, dass vom Druckspeicher eine fluidische Verbindungsleitung sowohl zur ersten als auch zur zweiten Teilkammer führt. Aufgrund dieser separaten Verbindungsleitungen lassen sich bevorzugte Konstruktionsvarianten ausbilden. Insbesondere kann zum Beispiel die fluidische Verbindungsleitung zur ersten Teilkammer ventilbeherrscht ausgeführt werden. Es ist dadurch zum Beispiel möglich, durch Schließen des in dieser Verbindungsleitung angeordneten Ventils die erste Teilkammer vom Druckspeicher zu entkoppeln und bei Öffnen des Füllventiles dann nur in Abhängigkeit von der Bewegungsführung des Verdrängungskörpers die in den Vorformling strömende Füllgutmenge zu steuern.

Insbesondere bei Vorsehen einer Drosselbarkeit der fluidischen Verbindungsleitung zur zweiten Teilkammer ist es möglich, die Bewegung des Verdrängungskörpers zum Ende des Form- und Füllvorganges abzubremsen, indem nämlich die fluidische Verbindungsleitung verengt wird und dadurch der Zustrom an Füllgut gedrosselt wird, sodass der Verdrängungskörper bzw. die Antriebseinrichtung für diesen Verdrängungskörper gegen den gedrosselten Zustromquerschnitt arbeiten muss. In Alternative oder ergänzend dazu kann das Füllventil drosselbar ausgeführt werden. Gegen Ende des Füllvorgangs kann der Zustrom an Füllgut stärker gedrosselt werden, so dass dadurch der Verdrängungskörper gegen einen höheren Druck arbeiten muss und dadurch gebremst wird. Druckschläge zum Ende des Füllvorganges können mit diesen Ausführungsvarianten vermindert werden.

Weiterhin ist bevorzugt, dass der Strömungsquerschnitt der Verbindungsleitung zur zweiten Teilkammer größer dimensioniert ist als der Strömungsquerschnitt der Zuführleitung zum Vorformling. Auf diese Weise ist gewährleistet, dass der für das Nachströmen des Füllgutes in die Füllkammer zur Verfügung stehende Strömungsquerschnitt so dimensioniert ist, dass das abströmende Volumen unproblematisch nachgeführt werden kann. In Verbindung mit der Drosselbarkeit der Verbindungsleitung zur zweiten Teilkammer kann das Nachströmen des Füllgutes aus dem Druckspeicher in die Füllkammer beeinflusst werden und insbesondere kann das Nachströmen erschwert werden, um eine Bewegung des Verdrängungskörpers abzubremsen. Durch eine Drosselbarkeit des Füllventils kann ein gleicher Effekt beim Abströmen des Füllgutes aus der Füllkammer in den Vorformling erzielt werden.

Mit Vorteil kann eine kontinuierlich laufende Pumpe als Druckpumpe eingesetzt werden. Solche Pumpen können zwar die erforderlichen hohen Drücke erreichen, in der Regel aber nicht den für die Füllung erforderlichen großen Volumenstrom. In den Prozesszeiten zwischen zwei Füllvorgängen beaufschlagt die Pumpe bei geschlossenem Füllventil den Druckspeicher mit Füllgut unter Druck, wobei sich der Druckspeicher mit einem Volumen an Füllgut füllt.

Bei einem Form- und Füllvorgang ist ein bestimmter Mindestdruck erforderlich, um den Vorformling zu verformen. Höhere Drücke können eingesetzt werden und sind insbesondere in der Anfangsphase der Umformung vorteilhaft, um den Umformvorgang in Gang zu setzen. Der Beginn des Umformvorgangs kann aber auch durch eine Reckstange unterstützt werden.

Ein bestimmter Maximaldruck sollte ebenfalls nicht überschritten werden, einerseits weil die Systemkomponenten darauf nicht ausgelegt sind und andererseits, weil die Umformung des Vorformlings in den Behälter dann nicht kontrolliert erfolgt.

Der eingesetzte Druckspeicher sollte deshalb bevorzugt einen Vorspanndruck haben, der dem Mindestformdruck entspricht. Der Druck des Druckspeichers steigt bei Füllung mit dem Füllgut an. Je nach Auslegung und Volumen des Druckspeichers kann der Druckanstieg vernachlässigbar oder erheblich sein. Beispielsweise kann ein Vorspanndruck von 36 bar verwendet werden, der bei Füllung mit dem gewünschten Volumen an Füllgut auf z.B. 40 bar ansteigt. Falls der im Speicher erreichte Druck höher liegt als der maximale Fülldruck, sind entsprechend Druckminderer vor der Form- und Füllstation vorzusehen.

Die Pumpe muss den Druck, der im Druckspeicher erreicht werden soll, aufbringen können. Vorteilhaft erreicht die Pumpe einen dem maximalen Fülldruck entsprechenden Druck. Liegt der Pumpendruck höher, sind wiederum entsprechende Mittel zur Druckminderung vorzusehen.

Die vorstehend als beispielhaft beschriebene Auslegung hat den Vorteil, dass der im Druckspeicher aufgebaute Druck während des Form- und Füllvorgangs zunächst hoch ist, wodurch die Umformung des Vorformlings leichter in Gang gesetzt werden kann. Unterstützend und führend kann der Beginn der Umformung auch beispielsweise durch eine Reckstange erleichtert werden.

Anschließend ist in der Regel ein niedrigerer Druck ausreichend, um eine einmal in Gang gesetzte Umformung voranzutreiben. Der im Laufe des Form- und Füllvorgangs abfallende Druck des Druckspeichers ist deshalb unschädlich, sofern ein bestimmter Mindestdruck erhalten bleibt.

Der vom Druckspeicher zur Verfügung gestellte Druck kann dabei jeweils durch die Verdrängungspumpe erhöht werden, die einen zusätzlichen Druck bereitstellt. Insbesondere zu Beginn des Form- und Füllvorgangs kann dieser zusätzliche Druck bereitgestellt werden.

Das Volumen des Druckspeichers sollte mindestens dem Volumen des zu formenden und zu füllenden Behälters entsprechen, also im Wesentlichen dem Volumen der Form, in der der Vorformling in den Behälter umgeformt wird. Je nach Einsatz kann das Volumen des Druckspeichers aber auch höher liegen, insbesondere, wenn das Verfahren mit einer Form- und Füllvorrichtung umgesetzt wird, an der Behälter zeitlich überlappend an mehreren Form- und Füllstationen geformt und gefüllt werden können. Dies gilt in analoger Weise für die Verdrängungspumpe, deren Füllkammer ebenfalls so zu dimensionieren ist, dass das vollständig verdrängte Volumen ausreichend groß für die Füllung des fertigen Behälters ist.

Der Druckspeicher ist vorzugsweise ein Gasdruckspeicher, der mit einem Druck vorgespannt ist, der dem mindesten Form- und Fülldruck entspricht.

Bei der Pumpe handelt es sich vorzugsweise um eine kontinuierlich laufende Pumpe. Jede andere Pumpenart, mit der ein ausreichender Druck zu erzielen ist, ist aber ebenfalls geeignet. Der Arbeitsdruck der Pumpe sollte bevorzugt mindestens dem mindesten Fülldruck entsprechen, weiter bevorzugt dem maximalen Fülldruck. Bei höheren Drücken sind entsprechende Druckbegrenzer im Flüssigkeitsweg vor dem Füllventil vorzusehen.

Außerhalb eines Form- und Füllvorgangs, d.h. insbesondere bei geschlossenem Füllventil, beaufschlagt die Pumpe den Druckspeicher mit Füllgut unter Druck. Solange der von der Pumpe erzielte Druck größer als der im Druckspeicher herrschende Druck ist, pumpt die Pumpe Flüssigkeit in den Druckspeicher. Im Druckspeicher wird ein Volumen gespeichert, das bevorzugt mindestens dem für einen Form- und Füllvorgang erforderlichen Volumen entspricht, also im Wesentlichen dem inneren Volumen der Form, in der der Vorformling in den gefüllten Behälter umgeformt wird.

Ist das maximale Volumen des Druckspeichers erreicht oder steigt der Druck im Druckspeicher auf den gewünschten Wert an, so läuft die Pumpe leer oder das Füllgut wird über eine Rückführleitung mit Überdruckventil abgeleitet.

Für den eigentlichen Form- und Füllvorgang wird das Füllventil geöffnet. Es steht unmittelbar der volle Form- und Fülldruck zur Verfügung, der zuvor im Druckspeicher aufgebaut wurde. Der für den Form- und Füllvorgang erforderliche Volumenstrom kann unabhängig von der Pumpenleistung vom Druckspeicher zur Verfügung gestellt werden. Zusätzlich kann die Verdrängerpumpe Pumpenleistung hinzufügen.

Durch die Erfindung muss für die Vorrichtung keine Pumpe mehr eingesetzt werden, die einen hohen Volumenstrom liefern kann. Es genügt, wenn die Pumpe einen ausreichend hohen Druck zur Verfügung stellt und die Pumpenleistung ausreichend hoch ist, um zwischen zwei Füllvorgängen den Druckspeicher zu füllen. Die Pumpenleistung muss lediglich der pro Zeiteinheit abgefüllten Füllgutmenge entsprechen. Die kurzzeitig hohen Volumenströme werden von dem Druckspeicher zur Verfügung gestellt, unterstützt von der Verdrängerpumpe, die insbesondere durch die Antriebseinrichtung zeitlich veränderlich einen Fülldruck beisteuern kann.

In einem Ausführungsbeispiel der Erfindung kann in der Zuführleitung vorteilhaft ein Dämpfungselement angeordnet sein. Als Dämpfungselement ist insbesondere ein Gasdruckspeicher geeignet. Ein solcher Gasdruckspeicher kann mit einer Gasfüllung versehen sein, die durch eine Membran im Speicher gegen die Zuführleitung abgeschlossen ist. Als Dämpfungselement kann auch ein vorgespannter Kolben in einem Zylinder eingesetzt werden, der beispielsweise durch Federkraft oder Gasdruck vorgespannt sein kann. Kommt es am Ende eines Form- und Füllvorgangs zu einem sprunghaften Anstieg des Drucks, wird das Gaspolster im Druckspeicher komprimiert bzw. die Feder gespannt und die sich bildende Druckwelle auf diesem Weg gedämpft.

Der Druckspeicher sollte hierfür einen Vorspanndruck oder eine Vorspannkraft aufweisen, der dem maximalen Fülldruck entspricht oder leicht darüber liegt. Der Druckspeicher wird beim normalen Fülldruck auf diese Weise nicht gespannt und behält seine Aufnahmekapazität für die Druckwelle am Ende des Form- und Füllvorgangs.

Es hat sich als vorteilhaft erwiesen, wenn der Druckspeicher relativ zur Form- und Füllstation so ausgerichtet ist, dass sich die im Leitungssystem zwischen der Form- und Füllstation und dem Druckspeicher fortpflanzende Druckwelle rechtwinklig auf die Membran trifft, d.h., dass die Ausbreitungsrichtung der Druckwelle senkrecht zur Membran steht. Dies ist insbesondere dann gewährleistet, wenn die Membran des Druckspeichers senkrecht zur Achse des Vorformlings steht. Durch die besondere Ausbreitung von Wellen in dünnen Leitungen und die Reflexion an den Leitungswänden kann dieser Effekt aber auch bei entsprechend gebogenen Leitungen in anderer Ausrichtung erreicht werden.

Zur wirksamen Dämpfung der sich ausbreitenden Druckwelle und dem Schutz von möglichst weiten Bereichen der Vorrichtung ist es vorteilhaft, das Dämpfungselement nahe der Form- und Füllstation, insbesondere nahe eines Form- und Füllkopfes der Form- und Füllstation, anzuordnen. So kann sichergestellt werden, dass die Druckwelle sich nur in einem räumlich sehr begrenzten Bereich der Vorrichtung fortpflanzen kann und wirksam gedämpft wird. Weiter entfernt liegende Komponenten der Vorrichtung sind wirksam geschützt.

Da die Druckschläge nur ein sehr kleines Volumen verdrängen, kann das Dämpfungselement entsprechend klein ausgelegt werden. Es genügt, wenn beispielsweise ein Gasdruckspeicher eine maximale Flüssigkeitsaufnahmefähigkeit von weniger als 500 ml, insbesondere von weniger als 300 ml und vorzugsweise von weniger als 150 ml aufweist.

Die in ihrer Druckhöhe kaum zu bestimmenden Druckschläge können so mit nur einem einfachen Element beherrscht werden. Es werden Anlagenteile gegen Druckschläge geschützt, bei denen Sicherheitsventile nicht mehr wirken können.

In den nachfolgenden Zeichnungen sind Ausführungsbeispiele der Erfindung schematisch dargestellt. Es zeigen:
- Fig. 1: den schematischen Aufbau einer Form- und Füllvorrichtung unter Verwendung eines Druckspeichers nach dem Stand der Technik,
- Fig. 2: in schematischer Darstellung den grundsätzlichen Aufbau eines Ausführungsbeispiels einer erfindungsgemäßen Vorrichtung und eines erfindungsgemäßen Verfahrens.

Es versteht sich für den Fachmann, dass die hier dargestellten Ausführungsbeispiele lediglich zur Veranschaulichung des Prinzips der Erfindung dienen sollen und nur schematisch und nicht maßstabsgerecht wiedergegeben ist. Insbesondere dienen die dargestellten Abmessungen und Größenverhältnisse der Elemente untereinander nur der Veranschaulichung. Die tatsächlichen Abmessungen und Größenverhältnisse kann der Fachmann frei aufgrund seiner Fachkenntnisse bestimmen. Darüber hinaus sind nur die für das Verständnis der Erfindung erforderlichen Komponenten dargestellt. Reale Vorrichtungen können weitere Komponenten aufweisen.

Die dargestellte Vorrichtung verfügt über eine Form- und Füllstation 3, in der ein Vorformling 1 innerhalb einer Form 4 in einen gefüllten Behälter 22 umgeformt wird. Hierfür verfügt die Form- und Füllstation 3 über einen Form- und Füllkopf 5 mit einem Füllventil 6, das an eine Zuführleitung 2 angeschlossen ist, durch die der Form- und Füllstation 3 Füllgut aus einem Reservoir 9 unter Druck zugeführt werden kann.

Zur Formung und Füllung eines Behälters 22 wird der Form- und Füllkopf 5 dichtend auf die Mündung des Vorformlings 1 aufgesetzt und dem Vorformling 1 innerhalb der Füllzeit von z.B. maximal 150 ms Füllgut mit einem Druck von z.B. 36 bis 40 bar zugeführt. Dies erfordert bei einer 1,5-Liter Flasche z.B. einen Volumenstrom des Füllguts von mindestens 10 l/s.

Hierfür ist die Vorrichtung mit einer Pumpe 7 ausgerüstet, die kontinuierlich läuft und einen Druck von 40 bar erreicht. Die Zuführleitung 2 ist hinter der Pumpe 7 mit einem Rückschlagventil 8 versehen.

Weiter weist die Vorrichtung einen mit einem Gas vorgespannten Druckspeicher 10 auf. Der Druckspeicher 10 ist mit beispielsweise 36 bar vorgespannt und kann bei einem Druck von beispielsweise 40 bar ein Volumen von beispielsweise 1,5 Liter aufnehmen. Für die Befüllung größerer Behälter 22 wäre dieses Volumen beispielsweise größer zu wählen. Die laufende Pumpe 7 setzt das Füllgut in der Zuführleitung 2 unter einen Druck von 40 bar, so dass das Gas im Druckspeicher 10 komprimiert wird und der Druckspeicher 1,5 Liter des Füllguts aufnimmt. Bei Erreichen des Drucks von 40 bar nimmt der Druckspeicher 10 kein weiteres Füllgut mehr auf. Das von der Pumpe 7 geförderte Füllgut wird über das Überdruckventil 11 und die Rücklaufleitung 12 zurück in das Reservoir 9 geführt.

Ist der Druckspeicher 10 vollständig gefüllt, kann das Füllventil 6 geöffnet werden. Das im Druckspeicher 10 gespeicherte Füllgut fließt unter dem Anfangsdruck von 40 bar und mit hohem Volumenstrom durch den Form- und Füllkopf 5 in den Vorformling 1, der sich unter der Einwirkung des Füllguts innerhalb der Form 4 in den Behälter 22 umformt und gleichzeitig gefüllt wird. Bis zur vollständigen Ausformung und Füllung des Behälters 22 fällt der Druck im Druckspeicher 10 auf 36 bar ab, was für die Behälterformung ausreicht.

Der Druckspeicher 10 reagiert schnell und verzögerungsfrei und kann im Gegensatz zur Pumpe 7 den für die kurze Füllzeit erforderlichen Volumenstrom bereitstellen. Der Behälter 22 kann also aus dem thermisch konditionierten Vorformling 1 ausgeformt werden, ehe die Temperatur des Vorformlings 1 soweit fällt, dass er nicht mehr formbar ist.

Nach dem Schließen des Form- und Füllventils 6 kann der geformte Behälter 22 vom Form- und Füllkopf 5 getrennt und weiterverarbeitet werden, insbesondere durch Verschließen, Etikettieren etc. Die Pumpe 7 läuft kontinuierlich weiter und füllt den Druckspeicher 10 für den nächsten Form- und Füllvorgang erneut.

Die erfindungsgemäße Vorrichtung hat den Vorteil, dass eine einfache Pumpe 7 mit einer üblichen Literleistung verwendet werden kann, da der kurzzeitig für den Form- und Füllvorgang erforderliche hohe Volumenstrom vom Druckspeicher 10 gespeichert und bei Bedarf abgegeben werden kann.

Bei einer industriellen Anlage muss die Literleistung der Pumpe 7 so ausgelegt sein, dass sie der Abfüllmenge pro Zeiteinheit genügt. Die hohen erforderlichen Volumenströme während der Form- und Füllphase werden unter anderem durch Füllen und Leeren des Druckspeichers 10 erreicht. Der Druckspeicher 10 ist vom Volumen dabei so auszulegen, dass er bei der Formung und Füllung eines Behälters 22 zur Zeit das Behältervolumen aufnehmen kann. Bei der zeitlich überlappenden Formung und Füllung mehrerer Behälter 22 in unterschiedlichen an den Druckspeicher 10 angeschlossener Form- und Füllstationen 3 ist das Volumen des Druckspeichers 10 entsprechend zu erhöhen.

An die Zuführleitung 2 ist optional ein Dämpfungselement 20 angeschlossen. Es handelt sich dabei beispielsweise um einen Gasdruckspeicher, in dem ein Gaspolster 20a unter Druck hinter einer Membran 20b eingeschlossen ist. Der Gasdruck entspricht dabei dem maximalen Form- und Fülldruck der Vorrichtung, beispielsweise 38 bar. Je nach zu formendem Behälter 22 kann der verwendete Form- und Fülldruck jedoch unterschiedlich sein. Typischerweise kann der Druck des Gaspolsters 20a im Druckspeicher 10 zwischen 36 und 44 bar betragen, vorzugsweise zwischen 40 und 42 bar.

Wenn der Vorformling 1 durch die Einleitung des Füllguts innerhalb von ca. 100 bis 150 ms in einen gefüllten Behälter 22 umgeformt wird, kommt es dabei aufgrund des hohen Volumenstroms des Füllguts zu einen Druckschlag, wenn der Behälter 22 vollständig ausgeformt ist und seine Wand in Anlage mit der Wand der Form 4 gerät. Es tritt eine Druckspitze auf, die sich als Druckwelle rückwärts in der Anlage fortpflanzt. Die Höhe der Druckspitze kann nur schwer berechnet werden. Die Komponenten der Anlage sind in der Regel aber lediglich für den Fülldruck zuzüglich einer Sicherheitsmarge ausgelegt. Fortwährende Druckstöße können die Komponenten beschädigen.

Das Dämpfungselement 20 kann die Druckwelle durch die kurzzeitige Aufnahme eines geringen Füllgutvolumens dämpfen. Hierfür ist das Dämpfungselement 20 nahe am Form- und Füllkopf 5 angeordnet, so dass die Ausbreitung der Druckwelle auf einen eingeschränkten Bereich der Anlage begrenzt ist und die vorgeschalteten Komponenten wirksam geschützt werden.

Druck breitet sich im Leitungssystem zwar allseitig aus, auftretende Druckstöße pflanzen sich jedoch mit endlicher Geschwindigkeit als Welle fort. Es ist deshalb vorteilhaft, dass das Dämpfungselement 20 so angeordnet ist, dass die Ausbreitungsrichtung der Welle annähernd rechtwinklig zur Membran steht, da die Druckwelle dann besonders effektiv gedämpft werden kann.

Gleichwohl Druckspeicher 10 und Dämpfungselement 20 konstruktiv ähnlich erscheinen, ergeben sich doch im Detail erhebliche Unterschiede.

So ist insbesondere der Druckspeicher 10 stets größer als das Volumen eines herzustellenden Behälters 22 zu wählen, während das Volumen des Dämpfungselements 20 sehr viel kleiner als das Behältervolumen gewählt werden kann.

Des Weiteren erfolgt die Anordnung des Dämpfungselements 20 vorzugsweise nahe bei oder sogar integriert in den Form- und Füllkopf 5, während der Druckspeicher 10 eine Zuleitung zum Form- und Füllkopf 5 speist und auch längere Rohrstrecken zwischen Druckspeicher 10 und Form- und Füllkopf 20 unproblematisch sind.

Schließlich werden Maschinen mit mehreren Form- und Füllstationen 3 jeweils ein Dämpfungselement 20 pro Form- und Füllstation 3 bzw. pro Form- und Füllkopf 5 aufweisen, während mehrere oder alle Form- und Füllstationen 3 von demselben Druckspeicher 10 gespeist werden können.

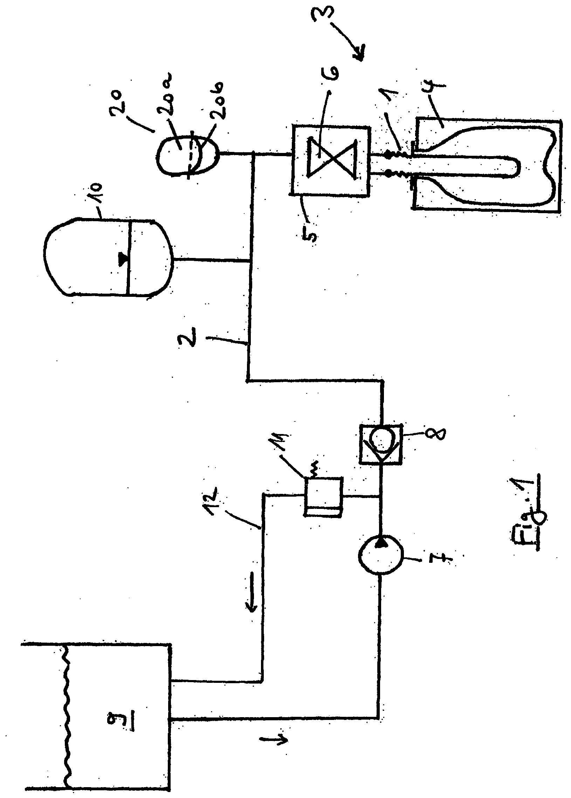

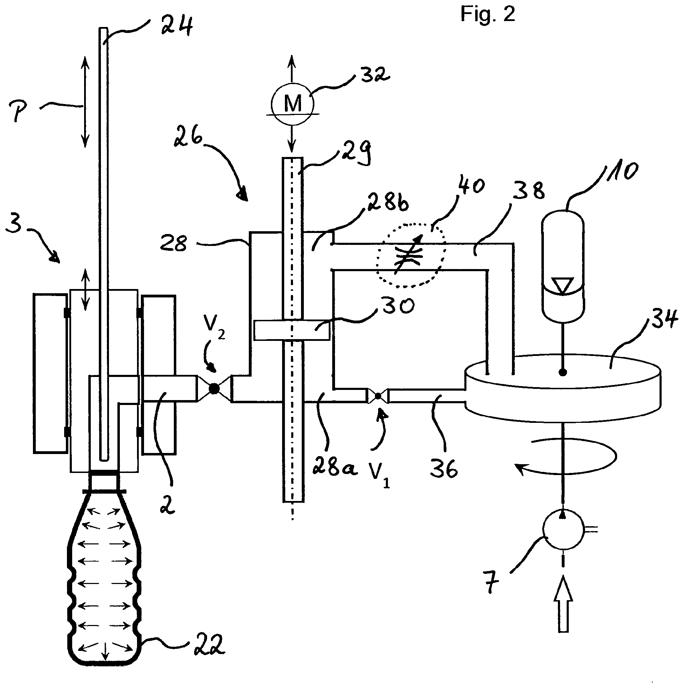

Fig. 2 zeigt ein erfindungsgemäßes Ausführungsbeispiel, das gegenüber dem in Figur 1 gezeigten Ausführungsbeispiel um eine Verdrängerpumpe 26 ergänzt ist, im Übrigen aber den zu Figur 1 erläuterten Aufbau haben kann. Zusätzlich zu dem bereits zu Fig. 1 beschriebenen Druckspeicher 10 und dem Reservoir 9 sowie zur Druckpumpe 7 ist eine zweite Pumpeneinrichtung dargestellt, die im gezeigten Ausführungsbeispiel als Verdrängerpumpe 26, nämlich als Kolbenpumpe ausgeführt ist. In einer Füllkammer 28 der Verdrängerpumpe 26 ist ein beweglicher Kolben 30 als Verdrängungskörper geführt. An einer axial aus der Füllkammer 28 herausragenden Kolbenstange 29 greift ein Antriebsmotor 32 als Antriebseinrichtung an. Der Kolben 30 unterteilt die Füllkammer 28 in eine untere 28a und eine obere Teilkammer 28b. Die obere Teilkammer 28b ist über eine Verbindungsleitung 38 mit einem Strömungsquerschnitt A mit dem Druckspeicher 10 verbunden. In dieser Verbindungsleitung 38 kann eine Drossel 40 angeordnet sein, wie dies mittels gestrichelter Linien angedeutet ist.

In der Verbindungsleitung 36 zum unteren Teil 28a der Füllkammer 28 ist ein Ventil V1 angeordnet, das die Verbindung 36 zwischen dem Druckspeicher 10 und dem unteren Teil 28a der Füllkammer 10 beherrscht. Im gezeigten Ausführungsbeispiel entspricht dieses Ventil V1 dem Einlassventil einer typischen Verdrängerpumpe, während das Ventil V2 in der Zuleitung 2 zur Form- und Füllstation 3 dem Auslassventil einer typischen Verdrängerpumpe entspricht. Das Füllventil 6 der Figur 1 entspricht dem Ventil V2 in Figur 2. Auch wenn V2 beabstandet zum Füllkopf dargestellt ist wird als bevorzugt angesehen, wenn dieses Füllventil V2 bzw. 6 möglichst nahe am Auslauf des Füllgutes in den Vorformling 1 angeordnet ist, wie dies im Bereich der Füller bekannt ist, um ein Nachtropfen, Toträume in der Füllgutzuleitung und hygienische Probleme zu vermeiden.

Ist das Auslassventil V2 geschlossen, so liegt zum Beispiel bei geöffnetem Ventil V1 im unteren und im oberen Teil 28a, 28b der Füllkammer 28 der gleiche Druck an, nämlich der Druck, der im Druckspeicher 10 herrscht. In diesem druckausgeglichenen Zustand kann der Kolben 30 durch den Motor 32 angetrieben werden, ohne dass ein Druckunterschied zu überwinden wäre.

Zum Zwecke der Formung und Befüllung wird Ventil V2 geöffnet und gleichzeitig oder zeitlich früher Ventil V1 geschlossen. Allein aufgrund des Druckunterschiedes vorformlingsseitig des Ventiles V2 gegenüber dem druckspeicherseitigen Bereich des Ventils V2 bewegt sich der Kolben 30 in einer Förderrichtung, denn der Druck im Druckspeicher 10 liegt über die Verbindungsleitung 38 in der oberen Teilkammer 28b an, während in der unteren Teilkammer 28a der Füllkammer 28 eine Druckabnahme erfolgt, da das Ventil V2 geöffnet ist. Der Kolben 30 wird also bereits durch den Druck im Druckspeicher 10 und durch die dargestellte Verschaltung zwischen der Druckkammer 10 und der Verdrängerpumpe 26 angetrieben. Zusätzlich kann eine weitere Antriebskraft durch die Antriebseinrichtung 32 aufgebracht werden, die z.B. als Linearmotor ausgeführt ist, sodass in diesem Fall die Antriebseinrichtung 32 zusammen mit dem Druckspeicher 10 den Förderdruck des Füllgutes in den Vorformling 1 ausbilden.

Falls in der Verbindungsleitung 38 zur oberen Teilkammer 28b der Füllkammer 28 ein Drosselventil 40 mit steuerbarem Querschnitt angeordnet ist, kann durch gezielte Verengung des Querschnittes der Verbindungsleitung 38 der Zustrom an Füllgut aus dem Druckspeicher 10 reduziert werden und dadurch die Kolbenbewegung verlangsamt werden. Die Kolbenbewegung kann auch durch die Antriebseinrichtung 32 verändert werden, zum Beispiel abgebremst werden. Es ist auch möglich, das Füllventil V2 drosselbar auszuführen. Bei Drosselung des Zustroms an Füllgut in den Vorformling 1 zum Ende des Füllvorgangs erfolgt auch ein Abbremsen des Kolbens 30, da dieser gegen einen größer werdenden Druck arbeiten muss.

Die Antriebseinrichtung 32 kann den Kolben 30 z.B. mit einem bestimmten Bewegungsprofil bewegen, also z.B. zu Beginn mit einer höheren Geschwindigkeit, um mit einem hohen Fülldruck und einem hohen Strömungsvolumen den Form- und Füllvorgang zu starten. Nach einer solchen Startphase kann die Geschwindigkeit dann verringert werden, um dann zum Ende des Form- und Füllvorgangs abgebremst zu werden zur Vermeidung eines starken Rückschlages bei Erreichen des vollständigen Ausformungszustandes des Behälters 22.

Mit Beendigung des Form- und Füllvorganges wird das Füllventil V2 geschlossen und das Einlassventil V1 geöffnet. Der Kolben 30 kann dann motorisch wieder angehoben werden, wobei in beiden Teilkammern 28a, 28b der Kolbenkammer 28 erneut ein Druckausgleich erfolgt ist mit Öffnen des Ventiles V1. Für das Ansaugen des Füllgutes in die untere Teilkammer 28a ist also kein Druckunterschied gegenüber der oberen Teilkammer 28b zu überwinden, und die für die Ansaugbewegung des Kolbens 30 aufzubringende Motorleistung ist deshalb gering.

In Figur 2 ist im Unterschied zu Figur 1 die Form- und Füllstation 3 mit einer Reckstange 24 ausgebildet, die in Richtung des Pfeiles P bewegbar ist, z.B. motorisch angetrieben oder z.B. durch eine externe Steuerkurve angetrieben. Zu Beginn des Form- und Füllprozesses wird die Reckstange 24 gegen das geschlossene Ende des Vorformlings 1 gefahren und reckt bei Weiterbewegung in dieser axialen Richtung den Vorformling 1 in dessen Axialrichtung. Sobald der Vorformling 1 die gewünschte Axialreckung erreicht hat kann die Reckstange 24 wieder aus dem Vorformling 1 bzw. aus dem entstandenen Behälter 22 herausgeführt werden.

Mit Bezugszeichen 34 ist ein Arbeitsrad der Form- und Füllmaschine angedeutet. Die anhand der schematischen Figuren 1 und 2 beschriebene Grundkonstruktion kann also mehrere Form- und Füllstationen 3 aufweisen, die umfangsbeabstandet auf diesem drehenden Arbeitsrad 34 angeordnet sind. Während des regulären Form- und Füllprozesses der Form- und Füllmaschine läuft das Arbeitsrad 34 kontinuierlich um und pro Umlauf wird jede der Form- und Füllstationen 3 einmal mit einem Vorformling 1 bestückt, formt diesen durch Einleitung des Füllgutes in einem Behälter 22 um und der fertig ausgeformte und gefüllte Behälter 22 wird entnommen. Bezüglich dieser Funktionsweise besteht Analogie zu den bekannten Blasrädern einer Blasformmaschine, siehe z.B. die WO 2012/083910 A1.

Bezüglich der Anordnung der Druckpumpe 7, des Druckspeichers 10 und der Verdrängerpumpe 26 bestehen bei Vorsehen der Form- und Füllstationen 3 auf einem Arbeitsrad 34 unterschiedliche Möglichkeiten. In Figur 2 dargestellt ist eine mögliche Ausführungsform. Die Druckpumpe 7 ist dabei stationär außerhalb des Arbeitsrades 34 angeordnet und über eine Drehverbindung wird das gepumpte Füllgut auf das Arbeitsrad 34 übertragen. Auch das in Figur 2 nicht dargestellte Reservoir 9 wäre stationär außerhalb des Arbeitsrades 34 anzuordnen. Die Druckpumpe 7 kann auch mitdrehend auf dem Arbeitsrad 34 angeordnet sein, wodurch die Drehverbindung dann geringeren Anforderungen an die Druckdichtigkeit genügen muss. Insofern ist diese Konstruktionsvariante vorteilhaft.

Auf dem Arbeitsrad 34 und mit diesem mitdrehend ist der Druckspeicher 10 angeordnet. Dieser Druckspeicher 10 versorgt alle Form- und Füllstationen 3 auf dem Arbeitsrad 34 mit unter Druck stehendem Füllgut. Denkbar wäre auch, mehr als einen Druckspeicher 10 auf dem Arbeitsrad 34 vorzusehen, von denen jeweils nur ein zugeordneter Teil der Form- und Füllstationen 3 mit Füllgut versorgt wird. Es könnte sogar jeder Form- und Füllstation ein eigener Druckspeicher 10 zugeordnet werden.

Die Verdrängerpumpe 26 ist bevorzugt auf dem drehenden Arbeitsrad 34 angeordnet und weiter bevorzugt in geringer Entfernung zur zugeordneten Form- und Füllstation 3, um kurze Leitungswege zwischen der Verdrängerpumpe 26 und der Form- und Füllstation 3 zu erreichen. Dabei ist bevorzugt jeder Form- und Füllstation 3 eine eigene Verdrängerpumpe 26 zugeordnet.

Bezüglich der in Figur 2 nicht dargestellten Maschinenkomponenten der Figur 1, also insbesondere bezüglich des Dämpfungselementes 20, wird hingegen bevorzugt jeder Form- und Füllstation 3 ein eigenes Dämpfungselement 20 zugeordnet, das bei Realisierung der Form- und Füllmaschine nach dem Rundläuferprinzip ebenfalls auf dem Arbeitsrad 34 angeordnet wäre.

**Bezugszeichenliste**

| | | | |
|---|---|---|---|
| 1 | Vorformling | | |
| 2 | Zuführleitung | | |
| 3 | Form- und Füllstation | | |
| 4 | Form | | |
| 5 | Form- und Füllkopf | | |
| 6 | Füllventil | | |
| 7 | Druckpumpe | | |
| 8 | Rückschlagventil | | |
| 9 | Reservoir | | |
| 10 | Druckspeicher | | |
| 11 | Überdruckventil | | |
| 12 | Rücklaufleitung | | |
| 20 | Dämpfungselement | | |
| 20a | Gaspolster | | |
| 20b | Membran | | |
| 22 | Behälter | | |
| 24 | Reckstange | | |
| 26 | Verdrängerpumpe | | |
| 28 | Füllkammer | 28a | erste Teilkammer |
| 30 | Verdrängungskörper | 28b | zweite Teilkammer |
| 32 | Antriebseinrichtung | 29 | Kolbenstange |
| 34 | Arbeitsrad | | |
| 36 | Verbindungsleitung zu 28a | | |
| 38 | Verbindungsleitung zu 28b | V1 | Ventil |
| 40 | Drossel, steuerbar | V2 | Ventil, Füllventil |
| | | P | Bewegungsrichtung Reckstange |

## Patentansprüche

1. Verfahren zum Herstellen von mit einem flüssigen Füllgut gefüllten Behältern (22) aus Vorformlingen (1) durch unter einem Fülldruck in den Vorformling (1) eingeleitetes Füllgut, wobei das Füllgut durch eine Druckpumpe (7) unter Druck gesetzt wird und an einer Form- und Füllstation (3) durch ein Füllventil (6) in den Vorformling (1) eingeleitet wird, wobei ein zwischen der Druckpumpe (7) und dem Füllventil (6) angeordneter Druckspeicher (10) von der Druckpumpe (7) mit Druck beaufschlagt und mit einem Volumen an Füllgut gefüllt wird, **dadurch gekennzeichnet, dass** eine Verdrängerpumpe (26) mit einer Füllkammer (28) für das Füllgut und mit einem darin beweglich geführten Verdrängungskörper (30) vorgesehen ist, wobei der Verdrängungskörper (30) die Kammer (28) in eine erste, füllstationsseitige (28a) und eine zweite, füllstationsabgewandte Teilkammer (28b) unterteilt, die jeweils in Strömungsverbindung mit dem Druckspeicher (10) bringbar sind, wobei der Verdrängungskörper (30) in Antriebsverbindung zu einer Antriebseinrichtung (32) steht und von der Antriebseinrichtung (32) antreibbar ist, wobei bei geöffnetem Füllventil (6) zumindest zeitweise die Antriebseinrichtung (32) und/oder der Druckspeicher (10) jeweils den Verdrängungskörper (30) mit einer Antriebskraft beaufschlagen, und dabei der Verdrängungskörper (30) zumindest einen Teil der für die Umformung des Vorformlings (1) erforderlichen Füllgutmenge in Richtung des Vorformlings (1) verdrängt.

2. Verfahren nach Anspruch 1, **dadurch gekennzeichnet, dass** der Verdrängungskörper (30) die gesamte für die Umformung des Vorformlings (1) erforderlich Füllgutmenge in Richtung des Vorformlings (1) verdrängt.

3. Verfahren nach Anspruch 1 oder 2, **dadurch gekennzeichnet, dass** mehrere Form- und Füllstationen (3) auf einem gemeinsamen, rotierenden Arbeitsrad (34) angeordnet werden und wobei das Arbeitsrad (34) im Form- und Füllbetrieb kontinuierlich umläuft.

4. Verfahren nach einem der vorhergehenden Ansprüche, **dadurch gekennzeichnet, dass** während der Einleitung des Füllgutes in den Vorformling (1) zumindest zeitweise gleichzeitig eine Reckstange (24) den Vorformling (1) in dessen Axialrichtung reckt.

5. Verfahren nach einem der vorhergehenden Ansprüche, **dadurch gekennzeichnet, dass** die Verdrängerpumpe (26) als Hubkolbenpumpe ausgebildet ist.

6. Verfahren nach einem der vorhergehenden Ansprüche, **dadurch gekennzeichnet, dass** zwischen der ersten (28a) und der zweiten Teilkammer (28b) vor dem Öffnen des Füllventils (6) ein Druckausgleich erfolgt.

7. Verfahren nach einem der vorhergehenden Ansprüche, **dadurch gekennzeichnet, dass** die Antriebseinrichtung (32) weggesteuert ausgeführt ist.

8. Verfahren nach einem der vorhergehenden Ansprüche, **dadurch gekennzeichnet, dass** jeweils eine fluidische Verbindungsleitung (36, 38) vom Druckspeicher (10) zur ersten (28a) und zur zweiten Teilkammer (28b) führt.

9. Verfahren nach Anspruch 8, **dadurch gekennzeichnet, dass** die Verbindungsleitung (36) zur ersten Teilkammer (28a) ventilbeherrscht ausgeführt ist, und/oder wobei die Verbindungsleitung (38) zur zweiten Teilkammer (28b) drosselbar ausgeführt ist.

10. Verfahren nach Anspruch 9, **dadurch gekennzeichnet, dass** vor dem Öffnen des Füllventils (6) oder zeitgleich die Verbindungsleitung (36) zur ersten Teilkammer (28a) geschlossen wird.

11. Verfahren nach einem der Ansprüche 8 bis 10, **dadurch gekennzeichnet, dass** der Strömungsquerschnitt der Verbindungsleitung (38) zur zweiten Teilkammer (28b) größer ausgeführt ist als der Strömungsquerschnitt der Zuführleitung (2) zum Vorformling (1).

12. Vorrichtung zum Herstellen von mit einem flüssigen Füllgut gefüllten Behältern (22) aus Vorformlingen (1) durch an einer Form- und Füllstation (3) unter Druck in den Vorformling (1) innerhalb einer Form (4) eingeleitetes Füllgut, umfassend eine Druckpumpe (7) und ein Füllventil (6), die durch eine Zuführleitung (2) miteinander verbunden sind, wobei die Vorrichtung einen Druckspeicher (10) aufweist, der in der Zuführleitung (2) zwischen der Druckpumpe (7) und dem Füllventil (6) angeordnet ist, **dadurch gekennzeichnet, dass** eine Verdrängerpumpe (26) mit einer Füllkammer (28) für das Füllgut und mit einem darin beweglich geführten Verdrängungskörper (30) vorgesehen ist, wobei der Verdrängungskörper (30) die Kammer (28) in eine erste, füllstationsseitige (28a) und eine zweite, füllstationsabgewandte Teilkammer (28b) unterteilt, die jeweils eine Verbindungsleitung (36, 38) mit dem Druckspeicher (10) aufweisen, wobei der Verdrängungskörper (30) in Antriebsverbindung zu einer Antriebseinrichtung (32) steht und von der Antriebseinrichtung antreibbar ist, wobei bei geöffnetem Füllventil (6) zumindest zeitweise der Verdrängungskörper (30) von der Antriebseinrichtung (32) oder vom Druckspeicher (10) oder von beiden gemeinschaftlich mit einer solchen Antriebskraft beaufschlagbar ist, dass der Verdrängungskörper (30) zumindest einen Teil der für die Umformung des Vorformlings (1) erforderlichen Füllgutmenge in Richtung des Vorformlings (1) verdrängt.

13. Vorrichtung nach Anspruch 12, **dadurch gekennzeichnet, dass** der Verdrängungskörper (30) die gesamte für die Umformung des Vorformlings (1) erforderlich Füllgutmenge in Richtung des Vorformlings (1) verdrängt.

14. Vorrichtung nach Anspruch 12 oder 13, **dadurch gekennzeichnet, dass** mehrere Form- und Füllstationen (3) auf einem gemeinsamen, rotierenden Arbeitsrad (34) angeordnet sind, das im Form- und Füllbetrieb der Vorrichtung kontinuierlich umläuft, wobei insbesondere die Verdrängerpumpe (26) und/oder die Druckpumpe (7) auf dem Arbeitsrad (34) angeordnet ist.

15. Vorrichtung nach einem der Ansprüche 12 bis 14, **dadurch gekennzeichnet, dass** die Form- und Füllstation (3) eine Reckstange (24) aufweist, die während der Einleitung des Füllgutes in den Vorformling (1) zumindest zeitweise gleichzeitig den Vorformling (1) in dessen Axialrichtung reckt.

16. Vorrichtung nach einem der Ansprüche 12 bis 15, **dadurch gekennzeichnet, dass** die Verdrängerpumpe (26) als Hubkolbenpumpe ausgebildet ist.

17. Vorrichtung nach einem der Ansprüche 12 bis 16, **dadurch gekennzeichnet, dass** die erste (28a) und die zweite Teilkammer (28b) vor dem Öffnen des Füllventils (6) zu einem Druckausgleich miteinander verbindbar ausgeführt sind.

18. Vorrichtung nach einem der Ansprüche 12 bis 17, **dadurch gekennzeichnet, dass** die Antriebseinrichtung (32) weggesteuert ausgeführt ist.

19. Vorrichtung nach einem der vorhergehenden Ansprüche 12 bis 18, **dadurch gekennzeichnet, dass** jeweils eine fluidische Verbindungsleitung (36, 38) vom Druckspeicher (10) zur ersten (28a) und zur zweiten Teilkammer (28b) führt.

20. Vorrichtung nach Anspruch 19, **dadurch gekennzeichnet, dass** die Verbindungsleitung (36) zur ersten Teilkammer (28a) ventilbeherrscht ausgeführt ist und/oder wobei die Verbindungsleitung (38) zur zweiten Teilkammer (28b) drosselbar ausgeführt ist.

21. Vorrichtung nach Anspruch 19 oder 20, **dadurch gekennzeichnet, dass** der Strömungsquerschnitt der Verbindungsleitung (36) zur zweiten Teilkammer (28b) größer ausgeführt ist als der Strömungsquerschnitt der Zuführleitung (2) zum Vorformling (1).

## Claims

1. A method for the production of containers (22) filled with liquid filling product from preforms (1) using filling product introduced into the preform (1) under filling pressure, wherein the filling product is pressurised by a pressure pump (7) and introduced into the preform (1) through a filling valve (6) at a moulding and filling station (3), wherein a pressure reservoir (10) arranged between the pressure pump (7) and the filling valve (6) is pressurised by the pressure pump (7) and filled with a volume of filling product,
**characterised in that**
- a positive displacement pump (26) with a filling chamber (28) for the filling product and with a positive displacement body (30) movably guided therein is provided, wherein the positive displacement body (30) subdivides the chamber (28) into a first partial chamber (28a) facing the filling station and a second partial chamber (28b) facing away from the filling station, which partial chambers can each be brought into fluid communication with the pressure reservoir (10), wherein the positive displacement body (30) is in driving communication with a drive unit (32) and can be driven by the drive unit (32), wherein, while the filling valve (6) is open, the drive unit (32) and/or the pressure reservoir (10) each charge the positive displacement body (30) with a driving force at least temporarily and, therein, the positive displacement body (30) displaces at least a part of the filling product amount required for moulding the preform (1) towards the preform (1).

2. The method according to Claim 1, **characterised in that** the positive displacement body (30) displaces the complete filling product amount required for moulding the preform (1) towards the preform (1).

3. The method according to Claim 1 or 2, **characterised in that** a plurality of moulding and filling stations (3) is arranged on a common rotating work wheel (34) and wherein the work wheel (34) continuously rotates in moulding and filling mode.

4. The method according to any one of the preceding claims, **characterised in that** a stretch forming bar (24) stretches the preform (1) into the axial direction thereof at least temporarily, simultaneously with the introduction of the filling product into the preform (1).

5. The method according to any one of the preceding claims, **characterised in that** the positive displacement pump (26) is configured as a reciprocating piston pump.

6. The method according to any one of the preceding claims, **characterised in that** the pressure between the first (28a) and second partial chambers (28b) is compensated before the filling valve (6) is opened.

7. The method according to any one of the preceding claims, **characterised in that** the drive unit (32) is configured path-controlled.

8. The method according to any one of the preceding claims, **characterised in that** a fluid communication line (36, 38) runs from the pressure reservoir (10) to each of the first (28a) and second partial chambers (28b).

9. The method according to Claim 8, **characterised in that** the communication line (36) to the first partial chamber (28a) is configured valve-governed and/or wherein the communication line (38) to the second partial chamber (28b) is configured in such a manner that it can be restricted.

10. The method according to Claim 9, **characterised in that** the communication line (36) to the first partial chamber (28a) is closed prior to or simultaneously with the opening of the filling valve (6).

11. The method according to any one of Claims 8 to 10, **characterised in that** the flow cross-section of the communication line (38) to the second partial chamber (28b) is configured larger than the flow cross-section of the feed line (2) to the preform (1).

12. A device for the production of containers (22) filled with liquid filling product from preforms (1) using filling product introduced into the preform (1) within a mould (4) at a moulding and filling station (3) under filling pressure, comprising a pressure pump (7) and a filling valve (6) connected to each other through a feed line (2), wherein the device has a pressure reservoir (10) that is arranged in the feed line (2) between the pressure pump (7) and the filling valve (6), **characterised in that** a positive displacement pump (26) with a filling chamber (28) for the filling product and with a positive displacement body (30) movably guided therein is provided, wherein the positive displacement body (30) subdivides the chamber (28) into a first partial chamber (28a) facing the filling station and a second partial chamber (28b) facing away from the filling station, which partial chambers each have a communication line (36, 38) to the pressure reservoir (10), wherein the positive displacement body (30) is in driving communication with a drive unit (32) and can be driven by the drive unit, wherein, while the filling valve (6) is open, the positive displacement body (30) can be charged with a driving force by the drive unit (32) or the pressure reservoir (10) or jointly by both at least temporarily such that the positive displacement body (30) displaces at least a part of the filling product amount required for moulding the preform (1) towards the preform (1).

13. The device according to Claim 12, **characterised in that** the positive displacement body (30) displaces the complete filling product amount required for moulding the preform (1) towards the preform (1).

14. The device according to Claim 12 or 13, **characterised in that** a plurality of moulding and filling stations (3) are arranged on a common rotating work wheel (34) that continuously rotates in moulding and filling mode, in particular wherein the positive displacement pump (26) and/or the pressure pump (7) are/is arranged on the work wheel (34).

15. The device according to any one of Claims 12 to 14, **characterised in that** the moulding and filling station (3) has a stretch forming bar (24) which stretches the preform (1) into the axial direction thereof at least temporarily, simultaneously with the introduction of the filling product into the preform (1).

16. The device according to any one of Claims 12 to 15, **characterised in that** the positive displacement pump (26) is configured as a reciprocating piston pump.

17. The device according to any one of Claims 12 to 16, **characterised in that** the first (28a) and second partial chambers (28b) are configured such that they can be connected to each other for pressure compensation purposes before the filling valve (6) is opened.

18. The device according to any one of Claims 12 to 17, **characterised in that** the drive unit (32) is configured path-controlled.

19. The device according to any one of Claims 12 to 18, **characterised in that** a fluid communication line (36, 38) runs from the pressure reservoir (10) to each of the first (28a) and second partial chambers (28b).

20. The device according to Claim 19, **characterised in that** the communication line (36) to the first partial chamber (28a) is configured valve-governed and/or wherein the communication line (38) to the second partial chamber (28b) is configured in such a manner that it can be restricted.

21. The device according to Claim 19 or 20, **characterised in that** the flow cross-section of the communication line (36) to the second partial chamber (28b) is configured larger than the flow cross-section of the feed line (2) to the preform (1).

## Revendications

1. Procédé de fabrication à partir de préformes (1) de récipients (22) remplis d'un produit liquide, au moyen d'un produit de remplissage introduit sous pression de remplissage dans la préforme (1), le produit de remplissage étant mis sous pression par une pompe refoulante (7) et étant, à une station de moulage et de remplissage (3), introduit dans la préforme (1) par une valve de remplissage (6), un accumulateur de pression (10) disposé entre la pompe refoulante (7) et la valve de remplissage (6) étant mis sous pression par la pompe refoulante (7) et rempli d'un certain volume de produit de remplissage, **caractérisé en ce qu'**une pompe volumétrique (26) est prévue, laquelle est dotée d'une chambre de remplissage (28) pour le produit de remplissage et d'un déplaceur (30) mobile guidé à l'intérieur de celle-ci, le déplaceur (30) subdivisant la chambre (28) en une première chambre partielle (28a) du côté de la station de remplissage et une seconde chambre partielle (28b) du côté opposé à la station de remplissage, lesquelles peuvent respectivement être mises en communication d'écoulement avec l'accumulateur de pression (10), le déplaceur (30) étant en liaison motrice avec un dispositif d'entraînement (32) et pouvant être entraîné par ce dispositif d'entraînement (32), le dispositif d'entraînement (32) et/ou l'accumulateur de pression (10) exerçant temporairement au moins une force motrice sur le déplaceur (30) lorsque la valve de remplissage (6) est ouverte, le déplaceur (30) chassant alors en direction de la préforme (1) une partie au moins de la quantité de produit de remplissage requise pour le formage de la préforme (1).

2. Procédé selon la revendication 1, **caractérisé en ce que** le déplaceur (30) chasse en direction de la préforme (1) la totalité de la quantité de produit de remplissage requise pour le formage de la préforme (1).

3. Procédé selon la revendication 1 ou 2, **caractérisé en ce que** plusieurs stations de moulage et de remplissage (3) sont agencées sur une roue de travail (34) commune tournante, la roue de travail (34) étant en rotation continue en service de moulage et de remplissage.

4. Procédé selon l'une des revendications précédentes, **caractérisé en ce que** temporairement au moins pendant l'introduction du produit de remplissage dans la préforme (1) une barre d'étirage (24) étire simultanément la préforme (1) dans sa direction axiale.

5. Procédé selon l'une des revendications précédentes, **caractérisé en ce que** la pompe volumétrique (26) est conçue comme pompe à piston alternatif.

6. Procédé selon l'une des revendications précédentes, **caractérisé en ce qu'**un équilibrage de pression a lieu entre la première chambre partielle (28a) et la seconde chambre partielle (28b) avant l'ouverture de la valve de remplissage (6).

7. Procédé selon l'une des revendications précédentes, **caractérisé en ce que** le dispositif d'entraînement (32) est commandé par une commande proportionnelle à la course.

8. Procédé selon l'une des revendications précédentes, **caractérisé en ce qu'**une conduite de raccordement (36, 38) mène respectivement de l'accumulateur de pression (10) à la première (28a) et à la seconde chambre partielle (28b).

9. Procédé selon la revendication 8, **caractérisé en ce que** la conduite de raccordement (36) menant à la première chambre partielle (28a) est réalisée de façon contrôlable par une valve et/ou que la conduite de raccordement (38) menant à la seconde chambre partielle (28b) est réalisée de façon à en permettre l'étranglement.

10. Procédé selon la revendication 9, **caractérisé en ce que** la conduite de raccordement (36) menant à la première chambre partielle (28a) est fermée avant ou simultanément à l'ouverture de la valve de remplissage (6).

11. Procédé selon l'une des revendications 8 à 10, **caractérisé en ce que** la section d'écoulement de la conduite de raccordement (38) menant à la seconde chambre partielle (28b) est supérieure à la section d'écoulement de la conduite d'alimentation (2) menant à la préforme (1).

12. Dispositif de fabrication de récipients (22) remplis d'un produit liquide à partir de préformes (1) au moyen d'un produit de remplissage qui, à une station de moulage et de remplissage (3), est introduit sous pression dans la préforme (1) à l'intérieur d'un moule (4), ce dispositif comprenant une pompe refoulante (7) et une valve de remplissage (6) lesquelles sont reliées par une conduite d'alimentation (2), le dispositif présentant un accumulateur de pression (10) disposé dans la conduite d'alimentation (2) entre la pompe refoulante (7) et la valve de remplissage (6), **caractérisé en ce qu'**une pompe volumétrique (26) est prévue, laquelle est dotée d'une chambre de remplissage (28) pour le produit de remplissage et d'un déplaceur (30) mobile guidé à l'intérieur de celle-ci, le déplaceur (30) subdivisant la chambre (28) en une première chambre partielle (28a) du côté de la station de remplissage et une seconde chambre partielle (28b) du côté opposé à la station de remplissage, lesquelles présentent respectivement une conduite (36, 38) de raccordement avec l'accumulateur de pression (10), le déplaceur (30) étant en liaison motrice avec un dispositif d'entraînement (32) et pouvant être entraîné par ce dispositif d'entraînement (32), le déplaceur (30) pouvant, lorsque la valve de remplissage (6) est ouverte, être temporairement au moins soumis par le dispositif d'entraînement (32) ou par l'accumulateur de pression (10) ou par les deux à la fois à une force motrice telle que le déplaceur (30) chasse alors en direction de la préforme (1) une partie au moins de la quantité de produit de remplissage requise pour le formage de la préforme (1).

13. Dispositif selon la revendication 12, **caractérisé en ce que** le déplaceur (30) chasse en direction de la préforme (1) la totalité de la quantité de produit de remplissage requise pour le formage de la préforme (1).

14. Dispositif selon la revendication 12 ou 13, **caractérisé en ce que** plusieurs stations de moulage et de remplissage (3) sont agencées sur une roue de travail (34) commune tournante qui est en rotation continue en service de moulage et de remplissage du dispositif, la pompe volumétrique (26) et/ou la pompe refoulante (7) étant notamment agencée(s) sur la roue de travail (34).

15. Dispositif selon l'une des revendications 12 à 14, **caractérisé en ce que** la station de moulage et de remplissage (3) présentant une barre d'étirage (24) qui, temporairement au moins pendant l'introduction du produit de remplissage dans la préforme (1), étire simultanément la préforme (1) dans sa direction axiale.

16. Dispositif selon l'une des revendications 12 à 15, **caractérisé en ce que** la pompe volumétrique (26) est conçue comme pompe à piston alternatif.

17. Dispositif selon l'une des revendications 12 à 16, **caractérisé en ce que** la première chambre partielle (28a) et la seconde chambre partielle (28b) sont réalisées de façon à pouvoir être reliées en vue d'un équilibrage de pression avant l'ouverture de la valve de remplissage (6).

18. Dispositif selon l'une des revendications 12 à 17, **caractérisé en ce que** le dispositif d'entraînement (32) est commandé par une commande proportionnelle à la course.

19. Dispositif selon l'une des revendications précédentes 12 à 18, **caractérisé en ce qu'**une conduite de raccordement (36, 38) mène respectivement de l'accumulateur de pression (10) à la première (28a) et à la seconde chambre partielle (28b).

20. Dispositif selon la revendication 19, **caractérisé en ce que** la conduite de raccordement (36) menant à la première chambre partielle (28a) est réalisée de façon contrôlable par une valve et/ou que la conduite de raccordement (38) menant à la seconde chambre partielle (28b) est réalisée de façon à en permettre l'étranglement.

21. Dispositif selon la revendication 19 ou 20, **caractérisé en ce que** la section d'écoulement de la conduite de raccordement (36) menant à la seconde chambre partielle (28b) est supérieure à la section d'écoulement de la conduite d'alimentation (2) menant à la préforme (1).
